Europäisches Patentamt

European Patent Office

Office européen des brevets

(19)

(11) Numéro de publication : **0 664 518 A1**

# (12) DEMANDE DE BREVET EUROPEEN

(21) Numéro de dépôt : **95400132.7**

(22) Date de dépôt : **23.01.95**

(51) Int. Cl.⁶ : **G06F 17/60**

(30) Priorité : **24.01.94 FR 9400705**

(43) Date de publication de la demande :
**26.07.95 Bulletin 95/30**

(84) Etats contractants désignés :
**DE GB IT**

(71) Demandeur : **COMMISSARIAT A L'ENERGIE ATOMIQUE**
**31/33, rue de la Fédération**
**F-75015 Paris Cédex 15 (FR)**

(72) Inventeur : **Herault, Laurent**
**Les Hauts de Furonnières No. 69**
**F-38640 Claix (FR)**

(74) Mandataire : **Dubois-Chabert, Guy et al**
**c/o BREVATOME**
**25, rue de Ponthieu**
**F-75008 Paris (FR)**

(54) **Procédé et dispositif de gestion optimale de moyens aptes à accomplir une tâche globale.**

(57)    L'invention concerne un procédé de gestion optimale de moyens, pris dans un ensemble de N moyens, aptes à accomplir une tâche globale découpée fonctionnellement en un ensemble de M tâches élémentaires pouvant être exécutées en parallèle, dans lequel on utilise un réseau de neurones décrit par un procédé itératif de détermination de variables qui codent la décision d'utiliser ou non un moyen sur une tâche élémentaire et qui satisfont des contraintes imposées par l'utilisation conjointe de moyens pour accomplir des tâches élémentaires de qualité mesurée, chaque contrainte repésentant une association d'un moyen à une tâche élémentaire.

L'invention concerne également un dispositif de gestion optimale de moyens.

FIG. 1

EP 0 664 518 A1

Domaine technique

La présente invention concerne un procédé et un dispositif de gestion optimale de moyens aptes à accomplir une tâche globale.

Etat de la technique antérieure

Le domaine technique auquel se rattache l'invention est celui de la gestion de moyens, ou planification de l'utilisation de moyens pour accomplir une tâche donnée. On dispose d'un ensemble de moyens (matériel, personnel, finances, etc....) dont l'utilisation doit être planifiée afin d'accomplir une tâche globale avec le maximum d'efficacité. La détermination d'une planification peut devoir être réalisée en un temps maximum fixé a priori. La tâche est découpée fonctionnellement en un ensemble de tâches élémentaires exécutables en parallèle. Ces tâches élémentaires peuvent être accomplies par certains des moyens disponibles, avec plus ou moins d'efficacité. A chaque couple (moyen, tâche élémentaire) est associée une qualité qui mesure l'efficacité de la planification. La disponibilité des moyens, leur efficacité pour traiter les tâches élémentaires et leurs utilisations conjointes sont soumises à des contraintes.

La complexité de ce problème est très grande: le nombre de planifications envisageables croît exponentiellement avec le nombre de moyens et de tâches élémentaires, rendant impossible leur évaluation une à une afin d'en conserver la meilleure, pour des problèmes comportant un grand nombre de moyens et/ou de tâches élémentaires.

Un article de J.J. Hopfield intitulé "Neural Networks and Physical Systems with Emergent Collective Computational Abilities" (Proceedings of the National Academy of Sciences 79:2554-2558, 1982) présente un réseau de neurones binaires récursif, dans le sens où chaque neurone est connecté à tous les autres sauf lui-même. L'objet de cet article est de montrer comment un réseau de neurones de ce type est à même de se comporter comme une mémoire associative. L'application est donc radicalement différente de celle qui intéresse l'invention.

Dans un paragraphe, il considère le cas particulier des matrices de connexions symétriques, c'est-à-dire pour lesquelles les poids synaptiques sont tels que $T_j^i = T_i^j$. Ensuite il définit une quantité, appelée énergie du réseau et notée E, qui est la somme

$$E = -\frac{1}{2} \sum_{i \neq j} T_j^i \, p_i \, p_j$$

Ce terme est équivalent à une énergie physique d'un verre de spins.

Quand le système évolue en mode asynchrone, en raison de la récursivité du système, l'énergie décroît jusqu'à ce qu'elle ait atteint un minimum. En effet, on peut énoncer le théorème suivant :

Théorème de Hopfield:

$$\frac{\Delta E}{\Delta t} \leq 0$$

est vérifiée si pour tout neurone i,

$$\frac{\Delta u_i}{\Delta t} = -\frac{\Delta E}{\Delta p_i}$$

et $p_i = 1$ si $u_i > 0$ et $p_i = 0$ si $u_i < 0$.

Pour démontrer ceci, il suffit d'écrire :

$$\frac{\Delta E}{\Delta t} = \sum_i \frac{\Delta E}{\Delta p_i} \, \frac{\Delta p_i}{\Delta u_i} \, \frac{\Delta u_i}{\Delta t} = \sum_i -\left(\frac{\Delta E}{\Delta p_i}\right)^2 \frac{\Delta p_i}{\Delta u_i} \leq 0$$

Un article de J.J. Hopfield, D.W. Tank intitulé "Neural Computation of Decizions in Optimization Problems" (Biological Cybemetics 52, 141-152, 1985) présente un schéma de circuit analogique pour résoudre des problèmes d'optimisation. Ils utilisent des neurones analogiques, c'est-à-dire avec une sortie comprise entre 0 et 1 et ils utilisent la propriété que les états stables du réseau sont les minima locaux de la quantité

$$E = -\frac{1}{2}\sum_{i \neq j} T^i_j \, p_i \, p_j + \sum_i I_i \, p_i$$

La démarche qu'il propose alors pour résoudre un problème d'optimisation consiste à exprimer sous la forme de l'énergie d'un réseau une combinaison linéaire de la fonction coût à minimiser et des contraintes:

E = coût + Σλ. contraintes

On en déduit alors la forme des coefficients synaptiques d'un réseau neuromimétique qui, en convergeant, minimise la fonction E.

Les auteurs ont traité un problème de voyageur de commerce. Dans une autre publication, qui fait suite à celle-ci, de D. Tank, J.J. Hopfield intitulé "Simple Neural Optimization Networks: an A/D Converter, Signal Decision Circuit, and Linear Programming Circuit" (IEEE Transactions on Circuits and Systems, volume CAS-33, N° 5, mai 1986) décrit le même type de circuit que celui décrit dans l'article précédent pour:
- la réalisation d'un convertisseur analogique/digital ;
- la décomposition de signaux en une somme de pulses gaussiens ;
- la résolution de problèmes de programmation linéaire.

On peut cependant noter les défauts suivants de cette approche :
- une grande sensibilité aux paramètres. La qualité des résultats est très dépendante des coefficients λ. Si ceux-ci sont grands, les contraintes sont d'autant mieux satisfaites. au détriment de la minimisation de la fonction coût. Si ceux-ci sont trop petits, la fonction coût est bien minimisée mais les contraintes sont très mal prises en compte ;
- non satisfaction des contraintes. Ce type de réseau ne peut garantir la satisfaction rigoureuse des contraintes. Ceci est particulièrement ennuyeux pour l'application de gestion de moyens car la contrainte disant qu'un moyen ne doit être affecté qu'à une seule tâche élémentaire ne peut être alors garantie;
- il est parfois impossible d'exprimer la fonction coût comme une forme quadratique. Dans ce cas, ce type de circuit est inadapté.

Un article de C. Peterson, B. Söderberg intitulé "A New Method for Mapping Optimization Problems onto Neural Networks" (International Journal of Neural Systems, volume 1, N° 1 (1989) 3-22) et un article de L. Gislén, C. Peterson, B. Söderberg intitulé "Complex Scheduling with Potts Neural Networks" (Neural Computation 4, 805-831, 1992) présentent une méthode neuromimétique pour résoudre des problèmes combinatoires, tels que des problèmes de partitionnement de graphes et des problèmes d'ordonnancement d'emploi du temps.

Les auteurs utilisent des neurones "vectoriels" appelés aussi neurones de Potts qui sont des neurones à plusieurs sorties. Les sorties des neurones sont analogiques. Les contraintes et la fonction coût à minimiser sont exprimées sous la forme d'une combinaison linéaire de fonctions quadratiques à minimiser. Par une analogie entre la fonction quadratique et l'énergie d'un système physique, les auteurs utilisent la théorie du champ moyen pour trouver un bon minimum.

Les problèmes sont les mêmes que ceux rencontrés dans la méthode de Hopfield et Tank. Cette approche ne garantit pas la satisfaction des contraintes et les auteurs précisent qu'il peut être nécessaire de répéter plusieurs fois l'exécution du programme en modifiant les paramètres jusqu'à ce qu'une solution admissible soit obtenue.

Un article de Y. Takefuji, K.C. Lee intitulé "An artificial Hysteresis Binary Neuron: a Model Supressing the Oscillatory Behaviors of Neural Dynamics" (Biological Cybemetics 64, 353-356, 1991) présente un modèle de neurone binaire dont la fonction de transfert est à hystérésis. Il montre qu'expérimentalement, sur une application particulière, cela réduit considérablement le nombre d'itérations nécessaires à la convergence du réseau.

Le problème que résolvent les auteurs est un problème discret. Il s'agit d'un problème d'aiguillage: un système a N entrées et N sorties. Il s'agit de connecter le maximum d'entrées aux sorties possibles pour ces entrées en respectant certaines contraintes: deux entrées ne peuvent être connectées à la même sortie et aucune entrée ne peut être connectée à plus d'une sortie.

Plutôt que de définir une fonction globale dont le minimum absolu est la solution optimale du problème, les auteurs écrivent directement les équations de mise à jour des potentiels des neurones.

Quand le réseau a convergé, pour le problème d'aiguillage, la satisfaction des contraintes est garantie.

Ce type de réseau ne fonctionne que quand on connaît la valeur optimale de la fonction coût (souvent cette fonction coût exprime une distance entre la solution optimale désirée et la solution réellement atteinte).

Dans le problème général de la gestion de moyens, la valeur optimale de la fonction coût à minimiser n'est pas nécessairement connue (par exemple quand la fonction coût mesure la quantité d'énergie à consommer pour utiliser les moyens). Ceci complique fortement le problème.

Un article de D.N. Zhou, V. Cherkassky, T.R. Balwin, D.E. Olson intitulé "A Neural Network Approach to Job-Shop Scheduling" (IEEE Transactions on Neural Networks, volume 2, N° 1, janvier 1991) propose d'utiliser des neurones analogiques pour résoudre un problème d'ordonnancement de type "Job Shop". L'originalité est que les auteurs utilisent une fonction de coût linéaire, ce qui a pour conséquence de réduire considérablement la complexité du réseau comparé à ceux de Hopfield et Tank.

La méthode proposée est très spécifique au problème de "Job Shop Scheduling". Elle ne s'applique pas aux problèmes plus généraux concernés par le procédé de l'invention.

Pour pallier aux différents inconvénients existant dans ces méthodes de l'art connu, la présente invention a pour objet un procédé et un dispositif de planification de l'utilisation de moyens afin de minimiser un coût de réalisation d'une tâche globale.

Exposé de l'invention

La présente invention propose un procédé de gestion optimale de moyens, pris dans un ensemble de N moyens, aptes à accomplir une tâche globale découpée fonctionnellement en un ensemble de M tâches élémentaires pouvant être exécutées en parallèle, caractérisé en ce qu'on utilise un réseau de neurones décrit par un procédé itératif de détermination de variables qui codent la décision d'utiliser ou non un moyen sur une tâche élémentaire et qui satisfont des contraintes imposées par l'utilisation conjointe de moyens pour accomplir des tâches élémentaires de qualité mesurée, chaque contrainte repésentant une association d'un moyen à une tâche élémentaire, et en ce que ledit procédé comporte les étapes suivantes :
- on construit un modèle de planification des moyens à partir des variables, de la qualité des associations, des contraintes et d'une mesure de la qualité de la planification;
- on utilise un procédé d'interruption pour prendre en compte ou non la mesure de la qualité de la planification;
- on initialise les variables;
- on réalise une exploitation dynamique récursive du modèle de planification;
- on détermine la planification de qualité maximale mesurée, en alternant ou non les étapes prenant en compte la qualité de la planification;
- on obtient une affectation des différents moyens aux différentes tâches élémentaires.

Le procédé de l'invention propose à différents intervalles de temps (par exemple à intervalles réguliers) des planifications de qualité différentes dont on retient la meilleure.

Pour passer d'une solution à l'autre, le procédé d'interruption relance le procédé de planification en augmentant les chances (la probabilité) d'avoir une solution meilleure.

Avantageusement le procédé de l'invention prend en compte la dérivée par rapport aux variables de la fonction mesurant la qualité globale.

Dans une étape élémentaire du procédé récursif, la détermination du signal d'entrée de la variable $p_{i,j}$ à t s'obtient à partir de la variation du signal d'entrée obtenu entre t-1 et t de la variable $p_{i,j}$ que l'on ajoute au signal d'entrée obtenu à t-1.

Pour l'exploitation du module d'organisation sur une itération, on a successivement les étapes suivantes :
a) On détermine un ensemble de corrections si l'ensemble des valeurs courantes des variables à t-1 viole des contraintes ;
b) On détermine une correction associée à la maximisation de la qualité de l'accomplissement de la tâche globale, et déterminée à partir de la dérivée par rapport à la variable $p_{i,j}$ de la fonction qui mesure la qualité de bon accomplissement de l'ensemble de tâches élémentaires à t-1 ;
c) A partir de l'instant t pour lequel les signaux d'entrée sont tous nuls, c'est-à-dire à partir du moment où le réseau de neurones a convergé, on prend en compte (procédé d'interruption ou de pulsation) cette correction définie en b) un nombre de fois fixé pour chaque variable, le signal d'entrée de la variable i augmentant si cette correction est prise en compte.
d) On calcule la variation du signal d'entrée entre t-1 et t en sommant les termes de correction obtenus à l'étape a et on ajoute la correction obtenue à l'étape b) un nombre de fois fixé pour chaque variable à partir de l'instant t pour lequel les signaux d'entrée sont tous nuls ;
e) On ajoute cette variation de signal d'entrée au signal d'entrée à t-1: on obtient ainsi le signal d'entrée à t ;
f) On applique une fonction de seuillage à sortie binaire sur ce signal d'entrée et on obtient la valeur de la variable à t.

Pour le procédé itératif d'exploitation du module d'organisation on a successivement les étapes suivantes :
a) On applique la correction pendant un nombre préalablement fixé de mises à jour de chaque variable ;
b) On supprime ensuite cette correction en ne prenant pas en compte la correction dans la détermination des signaux d'entrée associés aux variables ;
c) On applique la procédé de mise à jour d'une variable sur chaque variable ou sur toutes les variables à la fois, aussi longtemps que l'une au moins des variations des signaux d'entrée de toutes les variables est non nulle ;
d) On arrête le procédé de mise à jour d'une variable quand les variations des signaux d'entrée associés à toutes les variables sont toutes nulles ;
e) On obtient alors la première solution ;
f) Pour tenter de trouver une solution meilleure, on recommence à l'étape a) le nombre de fois souhaité.
Dans une première variante de réalisation :
- à tout instant, la meilleure solution est mémorisée ;
- à chaque fois qu'on effectue l'étape a), on mesure la qualité de la solution atteinte et on compare cette qualité à la qualité de la meilleure solution ;
- la meilleure solution est ainsi mémorisée.
Dans une seconde variante de la réalisation :
- à chaque fois qu'on effectue l'étape a), on mesure la qualité de la solution atteinte ;
- on mémorise cette solution ;
- à la fin, on sélectionne la meilleure solution parmi toutes celles mémorisées.
Par rapport aux documents de l'art connu, le procédé de l'invention présente les avantages suivants :
- la qualité des résultats est très peu dépendante des coefficients de pondération des contraintes $\alpha_c$. Ces coefficients de pondération n'ont pas besoin d'être ajustés finement pour chaque nouveau problème ;
- les coefficients de pondération des liens entre les neurones sont ajustés automatiquement pendant la convergence au niveau de chaque neurone et sont variables au cours du temps. Ainsi le réseau peut, à un instant donné, mettre en valeur un neurone particulièrement important ;
- il n'est pas nécessaire de connaître la valeur optimale du critère à minimiser ;
- le critère à minimiser peut être une fonction quelconque des variables $p_{ij}$ pourvu qu'elle soit une fois dérivable par rapport à chaque variable ;
- la satisfaction des contraintes est garantie à la convergence du réseau ;
- il est possible de limiter le temps de calcul. Quand on décide qu'une décision de planification doit être prise, le module de planification propose une planification admissible. Cette planification n'est pas nécessairement la meilleure possible. Si on laisse d'avantage de temps au module, la solution ne peut pas s'améliorer ;
- les calculs numériques internes au module de planification nécessitent uniquement des opérations logiques et arithmétiques simples (+, -, x, /, comparaisons) dues au fait que les neurones utilisés sont binaires. Ceci rend possible la réalisation de matériel ("hardware") spécifique ;
- la vitesse de convergence est très rapide. Le nombre de mises à jour de chaque neurone nécessaire à l'obtention d'une très bonne solution est de l'ordre de quelques dizaines ;
- il est envisageable de traiter des matrices d'affectations à coefficients qui évoluent rapidement au cours de la convergence du réseau. Ceci peut être utile quand ces données sont imprécises et affinées au fur et à mesure que le temps passe.
Le procédé de l'invention est adapté aux problèmes de planification ci-dessous, donnés à titre d'exemples :
- gestion des ateliers flexibles: à partir d'un ensemble de machines (correspondant à des moyens), d'une mission découpée en un ensemble d'actions à réaliser par ces machines (correspondant à des tâches élémentaires) et de contraintes liées à l'utilisation conjointe de ces machines, le procédé décide quelles actions doivent être réalisées par quelles machines de manière à maximiser la qualité d'accomplissement de la mission globale ;
- affectation de personnel sur des postes de travail: on souhaite affecter du personnel sur des postes de travail en tenant compte de l'adéquation d'une personne à un poste, des disponibilités de chaque personne et de contraintes interdisant qu'une personne donnée travaille sur un poste donné pendant qu'une autre travaille sur un autre poste. Ces problèmes se rencontrent pour le choix des rotations d'équipage dans les compagnies aériennes, la constitution des équipes dans les entreprises, etc... ;
- planification des expériences scientifiques par exemple à bord des véhicules spatiaux. On dispose d'un ensemble d'expériences à réaliser et d'un ensemble de moyens expérimentaux. Le problème est de réaliser le maximum d'expériences dans le temps le plus bref par exemple en maximisant l'occupation, à tout instant, des moyens expérimentaux ;

- affectation de moyens financiers sur des postes budgétaires pour maximiser leur efficacité en minimisant le gaspillage.

L'invention concerne également un dispositif de gestion optimale de moyens, pris dans un ensemble de N moyens, aptes à accomplir une tâche globale découpée fonctionnellement en un ensemble de M tâches élémentaires pouvant être exécutées en parallèle, dans lequel on utilise un réseau de neurones décrit par un procédé itératif de détermination de variables qui codent la décision d'utiliser ou non un moyen sur une tâche élémentaire et qui satisfont des contraintes imposées par l'utilisation conjointe de moyens pour accomplir des tâches élémentaires de qualité mesurée, chaque contrainte représentant une association d'un moyen à une tâche élémentaire, et en ce que ledit dispositif comprend :

- une première mémoire des valeurs des variables qui reçoit en entrée la sortie d'un circuit de tirage d'un entier k compris entre 0 et N ;
- une seconde mémoire des qualités des associations recevant en entrée la sortie d'un circuit apte à quantifier les qualités des associations moyens/tâches élémentaires ;
- une troisième mémoire des valeurs des signaux d'entrée ;
- un circuit apte à analyser la violation de contraintes et à effectuer le calcul d'une correction à appliquer à un signal d'entrée associé à une variable i, recevant en entrée les sorties de la première mémoire et la sortie du circuit de tirage d'un entier ;
- un circuit apte à calculer une dérivée par rapport à une variable de la fonction de mesure de la qualité de la planification globale recevant en entrée les sorties de la première mémoire et celle de la seconde mémoire ainsi que celle du circuit de tirage d'un entier ;
- un circuit de calcul d'une correction pour maximiser la qualité de la planification recevant en entrée les sorties de la première et de la seconde mémoire et celle du circuit de correction ;
- un dispositif d'interruption recevant en entrée les sorties de la troisième mémoire ;
- un circuit de seuillage à sortie binaire (échelon) recevant la sortie de ce second additionneur qui délivre la variable $p_{i,j}$.

## Brève description des dessins

- La figure 1 illustre le procédé de l'invention ;
- la figure 2 illustre le fonctionnement d'un neurone formel ;
- la figure 3 représente un neurone dans un réseau de neurones ;
- la figure 4 illustre le module de planification utilisé dans le procédé de l'invention ;
- les figures 5 et 6 illustrent deux représentations d'un neurone dans un réseau ;
- la figure 7 illustre la détermination de la valeur d'une variable ;
- la figure 8 illustre une autre forme de visualisation d'un neurone dans un réseau ;
- la figure 9 illustre un dispositif de gestion optimale de moyens selon l'invention ;
- la figure 10 illustre la relation existant entre le nombre moyen de mises à jour du réseau, le nombre de tâches élémentaires et le nombre de moyens disponibles ;
- la figure 11 illustre un exemple des temps de calcul moyen ;
- la figure 12 illustre un exemple de matrice d'affectations ;
- la figure 13 illustre un exemple de planification retenue ;
- la figure 14 illustre un exemple de matrice d'affectations ;
- la figure 15 illustre un exemple de distribution des résultats en fonction de l'état initial aléatoire du réseau.

## Exposé détaillé de modes de réalisation

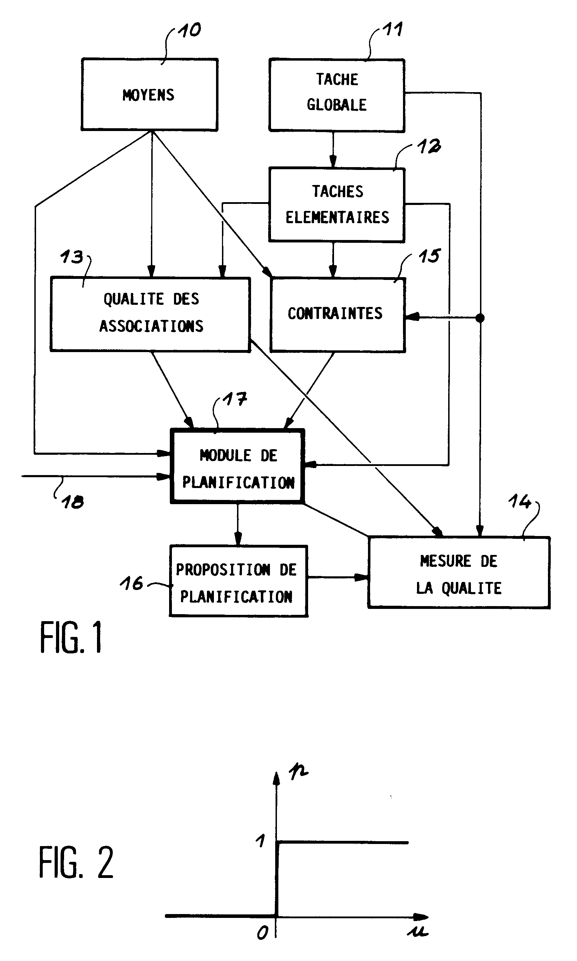

L'invention présente un procédé qui optimise la planification de l'utilisation de moyens pour accomplir une tâche donnée. Comme représenté sur la figure 1, ce procédé comprend :

- une définition 10 de l'ensemble des moyens et de leurs caractéristiques ;
- une définition 11 d'une tâche globale à accomplir ;
- un découpage fonctionnel 12 de la tâche en un ensemble de tâches élémentaires ;
- une définition 13 des mesures des qualités des associations moyens/tâches élémentaires ;
- une mesure 14 de la qualité d'accomplissement de la tâche globale (qualité d'une planification) ;
- une définition 15 d'un ensemble de contraintes sur l'utilisation des moyens ;
- une proposition 16 de planification effectuée par un module de planification 17 chargé de donner une planification permettant de maximiser la qualité globale en fonction des moyens disponibles et des tâches élémentaires à accomplir.

La figure 1 résume ainsi les dépendances entre les diverses tâches du procédé.

Une ligne d'interruption 18 permet d'arrêter le procédé afin qu'il propose une planification (cette planification pourrait éventuellement être meilleure si on laissait plus de temps au procédé). Cette ligne est très utile dans les applications nécessitant une prise de décision de l'utilisation des moyens dans un temps éventuellement très bref fixé par l'utilisateur.

Une caractéristique importante du procédé de l'invention concerne le module de planification 17, son fonctionnement interne et son couplage avec les autres modules. Elle propose de réaliser ce module de planification 17 à partir de réseaux neuromimétiques.

Aucune publication de l'art antérieur ne traite de la résolution du problème posé en utilisant des réseaux neuromimétiques. Par contre, des réseaux neuromimétiques ont déjà été utilisés pour résoudre d'autres problèmes d'optimisation.

Un réseau neuromimétique est formé de neurones formels. Un tel neurone formel est une unité de calcul constituée d'une entrée appelée potentiel (noté u) et d'une sortie (notée p). La sortie est donnée par une fonction de transfert non-linéaire appliquée au potentiel. Dans la présente invention, la fonction non linéaire est une fonction seuil, comme représenté sur la figure 2. On parle alors de neurone binaire.

Certains auteurs utilisent des neurones analogiques où la sortie est comprise entre 0 et 1. La fonction de transfert est alors une fonction non-linéaire croissante.

Les neurones peuvent donc être organisés en "réseau". Pour se faire, ils sont connectés entre eux via des connexions pondérées, appelées poids synaptiques $T_j^i$. Le potentiel d'un neurone est alors défini comme la somme pondérée des sorties d'autres neurones auquel il est connecté et éventuellement d'un seuil d'activation $I_i$.

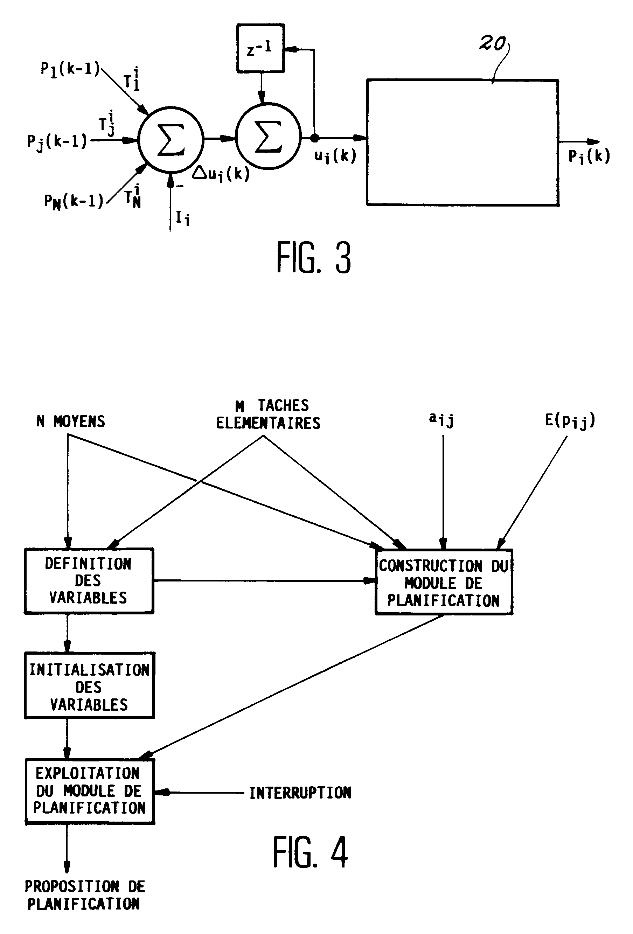

La figure 3 représente un neurone ij (20) dans un réseau de N neurones.

Au départ, les sorties des neurones sont tirées aléatoirement (0 ou 1). Puis le réseau fonctionne en mettant à jour ses neurones. Pour mettre à jour un neurone ij, on calcule son potentiel à l'instant k:

$$u_i(k) = u_i(k-1) + \Delta u_i(k) = u_i(k-1) + \sum_{j=1}^{N} T_j^i \, p_j(k-1) - I_i$$

Suivant le signe de la variation de potentiel $\Delta u_i(k)$ entre deux mises à jour du neurone ij, on dit que le neurone est inhibé (variation de potentiel négative qui tend à mettre la sortie à 0) ou excité (variation de potentiel positive qui tend à mettre la sortie à 1). Si son potentiel est positif, il met sa sortie à 1. Dans le cas contraire, il met sa sortie à 0. Ainsi la sortie du neurone ij peut être amenée à changer entre deux mises à jour. On dit que le réseau a convergé si, pour chaque neurone, aucune mise à jour ne modifie le potentiel du neurone.

L'ordre dans lequel sont mis à jour les neurones a une grande importance pour la convergence. Cela définit le "mode de convergence". Le mode de convergence peut être :

- asynchrone: dans ce cas, un neurone est mis à jour à la fois. Une fois qu'un neurone a été mis à jour, sa nouvelle sortie sert à la mise à jour des autres neurones. On peut alors mettre à jour les neurones séquentiellement (dans un ordre fixé, on parle alors de mode asynchrone séquentiel) ou aléatoirement (on parle alors de mode asynchrone aléatoire);
- synchrone: dans ce cas, tous les neurones sont mis à jour en même temps. A chaque mise à jour, on fige les sorties de tous les neurones, on calcule les potentiels de tous les neurones et on en déduit l'ensemble des nouvelles sorties;
- synchrone par bloc: ce mode mélange les deux modes précédents. On met à jour de façon synchrone des blocs de neurones.

Le procédé de l'invention est un procédé de gestion optimale de moyens, pris dans un ensemble de N moyens, aptes à accomplir une tâche globale découpée fonctionnellement en un ensemble de M tâches élémentaires pouvant être exécutées en parallèle, dans lequel on utilise un réseau de neurones décrit par un procédé itératif de détermination de variables qui codent la décision d'utiliser ou non un moyen sur une tâche élémentaire et qui satisfont des contraintes imposées par l'utilisation conjointe de moyens pour accomplir des tâches élémentaires de qualité mesurée, chaque contrainte représentant une association d'un moyen à une tâche élémentaire. Ce procédé comporte les étapes suivantes :

- on construit un modèle de planification des moyens à partir des variables, de la qualité des associations, des contraintes et d'une mesure de la qualité de la planification ;
- on utilise un procédé d'interruption pour prendre en compte ou non la mesure de la qualité de la planification ;
- on initialise les variables ;

- on réalise une exploitation dynamique récursive du modèle de planification ;
- on détermine la planification de qualité maximale mesurée, en alternant ou non les étapes prenant en compte la qualité de la planification ;
- on obtient une affectation des différents moyens aux différentes tâches élémentaires.

Avantageusement le procédé d'interruption prend en compte la dérivée de la fonction mesurant la qualité globale.

Le procédé de l'invention propose à différents intervalles de temps (par exemple à intervalles réguliers) des planifications de qualité différentes dont on retient la meilleure.

Pour passer d'une solution à l'autre, le procédé d'interruption relance le procédé de planification en augmentant les chances (la probabilité) d'avoir une solution meilleure.

Selon l'invention le module de planification peut être schématisé de la façon représentée à la figure 4. Il résout le problème générique suivant : on dispose d'un ensemble de moyens, au nombre de N, et d'un ensemble de tâches élémentaires à accomplir, au nombre de M. Un coefficient $a_{ij}$, fourni par le module des calculs d'adéquations ressources/sous-tâches dont la valeur est comprise entre 0 et 1, mesure la capacité du moyen $i$ à accomplir la tâche élémentaire $j$. Si le moyen $i$ n'est pas adapté à la tâche élémentaire $j$, alors $a_{ij} = 0$. Si le moyen $i$ convient parfaitement à l'accomplissement de la tâche élémentaire $j$, alors $a_{ij} = 1$. Dans l'hypothèse où l'adéquation entre le moyen $i$ et la tâche élémentaire $j$ n'est pas maximum, alors $a_{ij}$ vaut entre 0 et 1.

La planification cherchée s'exprime sous la forme d'une matrice bidimensionnelle à coefficients binaires $p = (p_{ij})$ à N lignes et M colonnes telle que $p_{ij} = 1$ si le moyen $i$ est affecté à la tâche élémentaire $j$ et $p_{ij} = 0$ sinon.

On définit ainsi l'ensemble des variables $p_{ij}$ qui correspondent à des associations de moyens et de tâches élémentaires de qualité non nulle (sachant qu'à chaque jeu de valeurs des variables correspond une mesure de qualité d'accomplissement de la tâche). Les variables sont binaires :

$$p_{ij} = 0 \Rightarrow \text{on n'associe pas le moyen } i \text{ à la tâche élémentaire } j$$
$$p_{ij} = 1 \Rightarrow \text{on associe le moyen } i \text{ à la tâche élémentaire } j$$

Une association a une qualité connue et comporte des contraintes intrinsèques et/ou liées à l'utilisation des moyens.

Une qualité d'accomplissement de la tâche est définie à partir des qualités des associations des moyens aux tâches élémentaires.

La qualité globale de la planification est mesurée par une fonction E des variables $p_{ij}$. Cette fonction est supposée une fois dérivable par rapport à chacune des variables.

Le module de planification cherche à optimiser la structure de la matrice P pour minimiser la fonction E tout en satisfaisant les contraintes. Ainsi un moyen peut comporter des contraintes intrinsèques et d'autres dépendantes des autres moyens.

Le module de planification a pour entrées, en provenance des autres modules du procédé :
- la liste des moyens et leurs adéquations pour traiter les tâches élémentaires (coefficients $a_{ij}$) ;
- une définition du critère global à optimiser (fonction E) ;
- la liste des contraintes sur les coefficients $p_{ij}$.

Le module de planification résout un problème de planification complexe et répond à la question: quels doivent être les coefficients $P_{ij}$ qui minimisent la fonction E tout en satisfaisant les contraintes ? Ce problème est combinatoire: il n'est pas envisageable, en pratique pour des questions de temps de résolution, d'énumérer l'ensemble des solutions potentielles afin d'en dégager la meilleure. La méthode consiste alors à utiliser une technique qui s'approche rapidement d'une bonne solution, sans pour autant pouvoir garantir que la solution retenue sera la meilleure possible.

Le critère à minimiser est une fonction E des coefficients de la matrice P. Elle mesure un coût de planification qui doit être minimisé. Elle peut par exemple mesurer :
- un coût de mise en oeuvre des moyens lorsque on les affecte aux tâches élémentaires (temps, argent, énergie, etc...);
- une probabilité de succès dans l'accomplissement de la tâche globale.

La valeur du minimum absolu recherché n'est pas nécessairement connue. Suivant la définition du coût à minimiser. la fonction peut avoir les formes suivantes :

$$E_1 = \sum_{i=1}^{N} \sum_{j=1}^{M} a_{ij}\, p_{ij} \ , \qquad E_2 = \sum_{j=1}^{M} \prod_{i=1}^{N} (1 - a_{ij}\, p_{ij}) \ ,$$

ou toute autre fonction dérivable par rapport à chacune des variables $p_{ij}$.

Maximiser la qualité, c'est maximiser la probabilité que des tâches élémentaires soient bien accomplies. Dans le cas où les qualités des associations moyens/tâches élémentaires sont binaires, maximiser la qualité revient à maximiser le nombre de tâches élémentaires accomplies.

Dans le cas où les qualités des associations moyens/tâches élémentaires sont des coefficients de pondération (réels entre 0 et 1), alors maximiser la qualité, c'est maximiser la probabilité de bon accomplissement de l'ensemble des tâches élémentaires. La probabilité de bon accomplissement est mesurée par la fonction E réelle :

- des qualités des associations moyens/tâches élémentaires ;
- des valeurs des sorties des variables.

Cette fonction E peut avoir une forme quelconque mais doit être une fois dérivable par rapport à chaque variable.

Les contraintes prises en compte au sein du module de planification sont par exemple les suivantes :
- chaque moyen doit être affecté à au plus une tâche élémentaire ;
- chaque tâche élémentaires est réalisée par au plus un moyen, ou par un nombre fixé de moyens ;
- certains moyens ne peuvent être utilisés ensemble : l'utilisation d'un moyen peut exclure l'utilisation d'autres moyens.

Le rôle du module de planification est de trouver un ensemble de valeurs des variables le meilleur possible au sens de :
- les valeurs des variables satisfont les contraintes ;
- la qualité d'accomplissement de la tâche globale est maximum ;
- les qualités des associations ressource/tâche élémentaire sont connectées en entrée externe.

L'ensemble des variables est balayé et réévalué au moins une fois.

Il y a évaluation par des fonctions réelles, du degré de satisfaction des contraintes puis définition de corrections portant sur les variables (une par type de contraintes) et application sur le signal d'entrée de la variable évaluée.

Une fonction est positive strictement quand la contrainte correspondante est violée, nulle quand la contrainte est satisfaite, et peut être strictement négative quand la contrainte est satisfaite indépendamment de la valeur de la variable mise à jour.

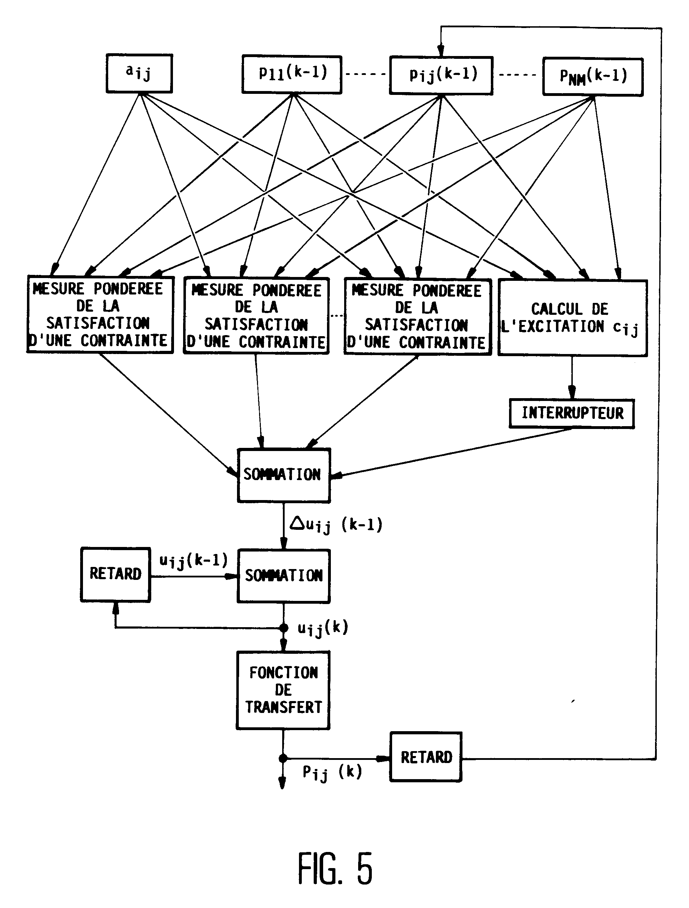

Son module est d'autant plus élevé que la contrainte correspondante est violée. Par exemple, si $p_{ij}$ est une variable correspondant à l'association du moyen i sur la tâche élémentaire j ($p_{ij}$ peut valoir 0 ou 1), la mesure de la satisfaction de la contrainte qui traduit le fait que le moyen i doit être utilisé au plus une fois peut être donnée par la représentation donnée à la figure 5.

Au temps T = 0, il y a initialisation, par exemple par tirage aléatoire dans un intervalle autour de 0, des signaux d'entrée des fonctions à sorties binaires et calcul des sorties correspondantes. Les variables de valeur 1 indiquent les associations moyens/tâches élémentaires à retenir dans l'organisation finale.

La dynamique du fonctionnement du module d'organisation est la suivante :

- <u>Exploitation du module d'organisation sur une itération</u>-

Le procédé de détermination d'un ensemble des valeurs des variables i satisfait les contraintes et maximise la qualité d'exécution de la tâche globale obtenue après plusieurs mises à jour de chaque variable $p_{ij}$ à plusieurs instants. C'est un procédé récursif dont une étape élémentaire est décrite ci-dessous. Il permet la mise à jour d'une variable $p_{ij}$ à l'instant t. Il reçoit en entrée :
- les qualités des associations (moyen/tâche élémentaire) associées à toutes les variables dont elle-même,
- les valeurs courantes de toutes les variables dont elle-même à l'instant t-1,
- la valeur courante du signal d'entrée de cette même variable à t-1.

Le but est de déterminer le signal à appliquer en entrée d'une fonction de seuillage (échelon) associé à la variable $p_{ij}$ dont la valeur de sortie est binaire et qui est associée à la valeur d'une variable $p_{ij}$ à l'instant donné t. La détermination du signal d'entrée de la variable i à l'instant t s'obtient à partir de la variation du signal d'entrée obtenu entre t-1 et t de la variable $p_{ij}$ que l'on ajoute au signal d'entrée obtenu à t-1.

On a ainsi les étapes suivantes :

a) On détermine un ensemble de corrections I si l'ensemble des valeurs courantes des variables à t-1 viole des contraintes: un terme correcteur/contrainte violée.

b) On détermine une correction associée à la maximisation de la qualité de l'accomplissement de la tâche globale. Cette correction est déterminée à partir de la dérivée par rapport à la variable $p_{ij}$ de la fonction qui mesure la qualité de bon accomplissement de l'ensemble de tâches élémentaires.

c) Par interruption (procédé d'interruption ou de pulsation) permettant de balayer les états stables (planification au cours du temps) à l'instant t pour lequel les signaux d'entrée sont tous nuls, on prend en compte cette correction un nombre de fois fixé pour chaque variable. Si cette correction est prise en compte, le signal d'entrée de la variable $p_{ij}$ augmente.

d) On calcule la variation du signal d'entrée entre t-1 et t en sommant les termes de corrections obtenus aux étapes a et b.

e) On ajoute cette variation de signal d'entrée au signal d'entrée à t-1: on obtient ainsi le signal d'entrée à t (avantageusement, le signal d'entrée obtenu à t est seuillé).

f) On applique une fonction de seuillage (échelon) à sortie binaire sur ce signal d'entrée et on obtient la valeur de la variable à t.

-Procédé itératif d'exploitation du module d'organisation-

Le procédé de l'invention permet de parcourir l'espace des solutions, en sautant d'une solution à une autre et en mémorisant la meilleure, ceci un certain nombre de fois, ou bien en rebondissant un certain nombre de fois de solution en solution, en mémorisant à chaque fois la solution (et sa qualité), la solution retenue étant la meilleure parmi celles atteintes. On a donc la suite des étapes suivantes :

a) On applique la correction associée à la maximisation de la qualité de la tâche globale pendant un nombre préalablement fixé de mises à jour de chaque variable.

b) On supprime ensuite cette correction en ne prenant pas en compte celle-ci dans la détermination des signaux d'entrée associés aux variables.

c) On applique le procédé de mise à jour d'une variable dans un certain ordre sur chaque variable (séquentiel ou aléatoire) ou sur toutes les variables à la fois, aussi longtemps que toutes les variations des signaux d'entrée de toutes les variables sont non nulles.

d) On arrête le procédé de mise à jour d'une variable quand les variations des signaux d'entrée associés à toutes les variables sont toutes nulles.

e) On obtient alors la première solution.

f) Pour tenter de trouver une solution meilleure, on recommence en a) le nombre de fois souhaité.

Pour déterminer la planification de qualité maximale mesurée en alternant ou non les étapes prenant en compte la qualité de la planification, il y a deux possibilités :

- A tout instant la meilleure solution est mémorisée; à chaque fois qu'on effectue la suite d'étapes décrite ci-dessus, on mesure la qualité de la solution atteinte et on compare cette qualité à la qualité de la meilleure solution; la meilleure solution est ainsi mémorisée ; ou

- A chaque fois qu'on effectue la suite d'étapes décrites ci-dessus, on mesure la qualité de la solution atteinte; on mémorise cette solution; à la fin, on sélectionne la meilleure solution parmi toutes celles mémorisées.

Avantageusement les initialisations des entrées sont voisines de 0.

Pour confirmer la validité de la solution proposée, sa qualité est mesurable par le procédé à partir des valeurs finales des variables et des qualités des associations. Si les qualités des associations (moyen/tâche élémentaire) sont toutes représentées par une valeur binaire, alors dans ce cas on connaît la forme d'une organisation optimale et plutôt que de chercher à maximiser la qualité de l'organisation globale le procédé dirige l'état courant des variables vers une structure d'organisation optimale.

Une variable peut être vue comme la sortie d'un neurone formel. Le signal d'entrée de cette variable correspond alors au potentiel du neurone. La fonction associée à la variable est la fonction de transfert du neurone. Le mode de fonctionnement décrit dans le procédé est la dynamique d'un réseau de neurones formels, que l'on appelle réseau de neurones pulsés.

On décrit maintenant la structure interne du module de planification. On associe un neurone formel ij à chaque coefficient $p_{ij}$ de la matrice P recherchée. Le module de calcul des adéquations ressources/sous-tâches fournit au module de planification une matrice N×M des affectations possibles.

Si la matrice des affectations possibles est à valeurs binaires, il est suffisant qu'une tâche élémentaire soit exécutée par un moyen et un seul. De plus, on connaît la forme d'une solution optimale. Plutôt que de chercher à minimiser un coût, on cherche à s'approcher le plus possible de la structure d'une solution optimale. Ceci justifie la forme des équations de mise à jour qui suivent.

La figure 5 visualise la structure d'un neurone ij dans un réseau.

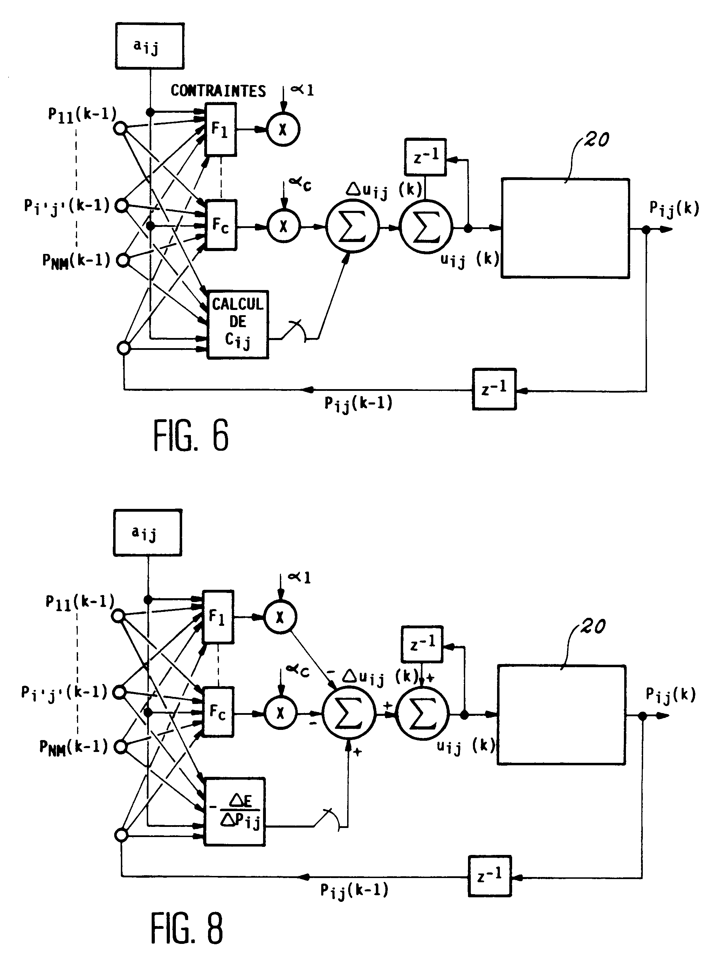

Une autre représentation possible est donnée sur la figure 6.

Pour tous les neurones ij, les équations de mise à jour des potentiels $u_{ij}$ (k) des neurones sont données par :

$$\Delta u_{ij}(k) = -\sum_{c} \alpha_c F_c(p_{11},...,p_{ij},...,p_{NM}) + \beta(k)C_{ij} \quad \text{où :}$$

. $F_c$ est une fonction des sorties des neurones relative à la contrainte c. Ce terme tend à inhiber le neurone ij si la contrainte c à laquelle il participe n'est pas satisfaite. Les coefficients de pondération des contraintes $\alpha_c$ sont des réels positifs qui pondèrent l'importance des contraintes entre elles.

Par exemple, on peut définir les fonctions suivantes :

$$F_1(p_{11},..., p_{ij},...,p_{NM}) = \left(\sum_{j'=1}^{M} a_{ij'} p_{ij'}\right)\left(-1 + \sum_{j'=1}^{M} a_{ij'} p_{ij'}\right)$$

$$F_2(p_{11},..., p_{ij},...,p_{NM}) = \left(\sum_{i'=1}^{N} a_{i'j} p_{i'j}\right)\left(-1 + \sum_{i'=1}^{N} a_{i'j} p_{i'j}\right)$$

$$F_3(p_{11},..., p_{ij},...,p_{NM}) = -\sum_{i'=1}^{N}\left[e_{ii'} \cdot \left(\sum_{j'=1}^{M} p_{i'j'}\right)\right]$$

On impose $\alpha_2 > 1$.

Le terme $F_1$ inhibe le neurone ij dès que le nombre de neurones à 1 dans la ligne i est supérieur à 1 (i.e. dès que le moyen i est affecté à plus d'une tâche élémentaire).

Le terme $F_2$ inhibe le neurone ij dès que le nombre de neurones à 1 dans la colonne j est supérieur à 1 (i.e. dès qu'une tâche élémentaire est réalisée par plus d'un moyen).

Le terme $F_3$ inhibe le neurone ij dès que le moyen i' est utilisé et que l'utilisation conjointe des moyens i et i' est interdite (ceci est indiqué par $e_{ii'} = 1$, sinon $e_{ii'} = 0$).

. $\beta(k)$ est un coefficient qui vaut 0 ou 1, suivant la valeur de k.

Et

$$C_{ij} = \begin{cases} 1 \text{ si } \sum_{j'=1}^{M} p_{ij'} = 0 \text{ et } \sum_{i'=1}^{N} p_{i'j} \neq 0 \\ 2 \text{ si } \sum_{j'=1}^{M} p_{ij'} = 0 \text{ et } \sum_{i'=1}^{N} p_{i'j} = 0 \\ \\ 0 \text{ sinon} \end{cases}$$

Le terme $\beta(k)$ permet au réseau de fonctionner avec une alternance de phases d'excitation et d'inhibition.

Dans une phase d'inhibition, correspondant à $\beta(k) = 0$, le réseau converge vers un minimum local de l'espace des solutions. En effet, dans ce cas, pour tout neurone ij, $\Delta u_{ij}(k) \leqq 0$. Le réseau évolue dans cette phase jusqu'à ce qu'à partir d'un instant k', pour tout neurone ij, on ait $\Delta u_{ij}(k) = 0$ quand k > k'.

Dans une phase d'excitation qui suit, correspondant à $\beta(k) = 1$, le terme $C_{ij}$ donne une impulsion au neurone ij pour tenter de sortir des minima locaux. Cette excitation n'est possible que si il n'y a pas de neurones déjà à 1 dans la ligne i (i.e., le moyen i ne doit pas être déjà affectée à une tâche élémentaire) et est plus élevée si la sous-tâche j n'est réalisée par aucun moyen. L'amplitude de cette impulsion est fonction de i et j. Cette phase d'excitation est fixée par exemple à trois unités de temps, c'est-à-dire à trois mises à jour du réseau.

Le réseau fonctionne donc sous un régime de pulsations (qu'on peut aussi appelé battements): il y a alternances successives de phases d'inhibition et de phases d'excitation. Régulièrement, à la fin de chaque phase d'inhibition, le réseau a convergé sur une planification admissible au sens des contraintes. Ce réseau est donc capable de proposer une planification en temps borné. La planification n'est pas nécessairement la meilleure si le nombre d'itérations est insuffisant.

EP 0 664 518 A1

Le réseau ainsi défini converge en mode asynchrone vers une solution satisfaisant les contraintes.

Si la matrice des affectations possibles est à valeurs réelles, pour chacun des neurones ij, on définit l'équation de mise à jour du potentiel du neurone qui s'écrit :

$$\Delta u_{ij}(k) = -\sum_{c} \alpha_c \, F_c(p_{11},...,p_{ij},...,p_{NM}) - \delta(k) \frac{\Delta E}{\Delta p_{ij}} \quad ;$$

avec :

· un terme lié au critère à minimiser: $-\frac{\Delta E}{\Delta p_{ij}}$. Ce terme, issu du théorème de Hopfield oriente la recherche opérée par le module de planification dans des régions où le critère est minimum. Le coefficient $\delta(k)$ est soit nul, soit non nul. Il permet au réseau de fonctionner avec une alternance de phases d'excitation et de phases d'inhibition. Dans une phase d'inhibition, correspondant à $\delta(k) = 0$, le réseau converge vers un minimum local de l'espace des solutions satisfaisant les contraintes. En effet, dans ce cas, pour tout neurone ij, $\Delta u_{ij}(k) \leq 0$. Le réseau évolue dans cette phase jusqu'à une date k' à partir de laquelle, pour tout k > k' et pour tout neurone ij, on ait $\Delta u_{ij}(k) = 0$ (le réseau de neurones a alors convergé). Dans la phase d'excitation qui suit, correspondant à $\delta(k) = 1$, le terme $-\frac{\Delta E}{\Delta p_{ij}}$ donne une impulsion au neurone ij pour tenter de sortir des minima locaux et se diriger vers d'autres régions de l'espace des solutions où E est minimale. L'amplitude de cette impulsion est fonction de i et j. Cette phase d'excitation est fixée par exemple à trois unités de temps, c'est-à-dire à trois mises à jour du réseau. Ce terme est crucial et nouveau dans le fonctionnement d'un réseau neuromimétique.

. $F_c$ est une fonction de la sortie des neurones relative à la contrainte c. Ce terme tend à inhiber le neurone ij si la contrainte c à laquelle il participe n'est pas satisfaite. Si la mise à 1 de la sortie du neurone ij.ne viole pas de contraintes, alors $F_c$ excite le neurone ij. Les coefficients $\alpha_c$ sont des réels positifs qui pondèrent l'importance des contraintes entre elles.

Par exemple, on prend un terme de contrainte :

$$F_1(p_{11},..., p_{ij},...,p_{NM}) = \left( -1 + \sum_{j=1}^{M} a_{ij} \, p_{ij} \right)$$

On impose, que pour tout k, $\alpha_1 > \delta(k)$.

$F_1$ retourne 0 quand les contraintes auxquelles participent la variable $p_{ij}$ sont satisfaites. Dans le cas contraire, ce terme est soit positif (excitateur) quand le moyen i n'est affecté à aucune tâche élémentaire, soit négatif (inhibiteur) quand le moyen i est déjà affecté à une tâche élémentaire.

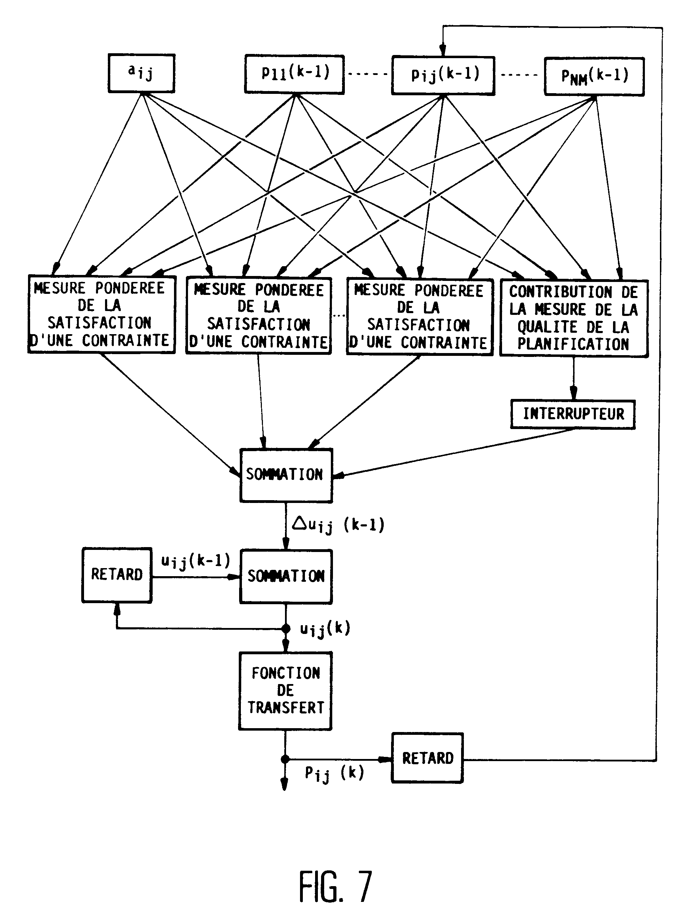

La sortie du neurone ij correspond à une variable du procédé. La valeur finale de chaque variable est déterminée au cours de l'exploitation du module de planification. Le schéma donné à la figure 7 précise la manière dont elle est déterminée.

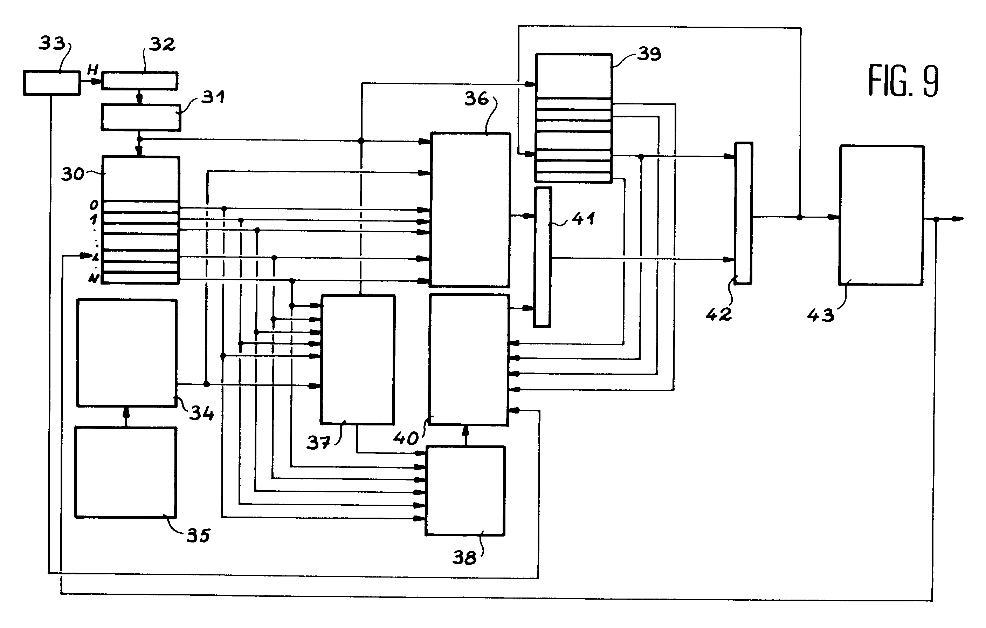

La figure 8 est une autre forme de visualisation d'un neurone ij dans un réseau.

Au cours de la convergence en mode asynchrone, quand le neurone ij est choisi à l'instant k, deux cas sont possibles :

1er cas : $\delta(k) = 0$

Le réseau cherche alors uniquement à satisfaire les contraintes: la solution vers laquelle il converge est telle que chaque moyen est affectée à exactement une tâche élémentaire. Ceci se démonte facilement par l'absurde. En effet, si cela n'est pas le cas, alors il existe un moyen i affecté à au moins deux tâches élémentaires. Pour ce moyen, on a

$$\sum_{j=1}^{M} p_{ij} \geq 2$$

et donc $\Delta u_{ij}(k) < 0$. En conséquence, le potentiel du neurone ij diminue. Ceci tend à inhiber le neurone ij et donc à refuser l'affectation du moyen i sur la tâche élémentaire j.

De plus, si le moyen i n'est affecté à aucun moyen, alors $\Delta u_{ij}(k) > 0$. En conséquence, le potentiel du neurone augmente. Ceci tend à exciter le neurone ij et donc à affecter le moyen i sur la tâche élémentaire j.

12

δ (k) reste à 0 jusqu'à ce que, pour tous les neurones ij on ait trouvé un instant k' à partir duquel, pour tout k > k', on ait $\Delta u_{ij}$ (k) = 0. Dès que cela est vérifié, δ (k) passe à 1.

   <u>2ème cas</u> : δ(k) ≠ 0

Dans ce cas, le deuxième terme, déduit du théorème de Hopfield, excite le neurone ij dans un sens favorable à la minimisation de la fonction objectif. Ces phases d'excitation au cours desquelles δ (k) est non nul ont une durée fixée par l'utilisateur (ici, quatre mises à jour complètes du réseau).

Le réseau ainsi défini converge en mode asynchrone vers une solution satisfaisant les contraintes.

Le cas où la matrice des affectations est binaire peut également être traité de cette manière.

Comme représenté sur la figure 9 le dispositif de l'invention comprend :

- une première mémoire 30 table des valeurs 0/1 des variables qui reçoit en entrée la sortie d'un circuit 31 de tirage d'un entier compris entre 0 et N relié lui-même à un générateur aléatoire 32 connecté à une horloge H 33 ;
- une seconde mémoire 34 matrice des qualités des associations recevant en entrée la sortie d'un circuit 35 apte à quantifier les qualités des associations moyens/tâches élémentaires dans l'exemple de l'application ;
- une troisième mémoire 39 table des valeurs des signaux d'entrée ;
- un circuit 36 apte à analyser la violation de contraintes, et à effectuer le calcul d'une correction à appliquer à un signal d'entrée associé à une variable $p_{ij}$, recevant en entrée les sorties de la première mémoire et la sortie du circuit de tirage d'un entier ;
- un circuit 37 apte à calculer une dérivée par rapport à une variable de la fonction de mesure de la qualité de la planification globale recevant en entrée les sorties de la première mémoire et celle de la seconde mémoire ainsi que celle du circuit de tirage d'un entier ;
- un circuit 38 de calcul d'une correction pour maximiser la qualité de la planification recevant en entrée les sorties de la première et de la seconde mémoire et celle du second circuit ;
- un dispositif d'interruption 40 recevant en entrée les sorties de la troisième mémoire et l'horloge H ;
- un premier additionneur 41 recevant en entrée les sorties respectives du circuit de calcul de la dérivée et du circuit de calcul de correction ;
- un second additionneur 42 recevant en entrée les sorties respectives de la troisième mémoire et du premier additionneur ;
- un circuit de seuillage 43 à sortie linéaire (échelon) recevant la sortie de ce second additionneur qui délivre la variable $p_{ij}$.

On va à présent considérer un exemple de réalisation sur des matrices d'affectation binaires. On a testé les performances du procédé quand le module de calcul des adéquations moyens/tâches élémentaires fournit des informations binaires au module de planification.

On constate alors expérimentalement que quel que soit l'état initial aléatoire des sorties des neurones de ce module, les planifications proposées après convergence ont toutes la même qualité. On a testé les performances du module de planification pour des nombres de moyens et de tâches élémentaires variables et des matrices d'adéquations ressources/sous-tâches de densité différente, où un moyen peut accomplir en moyenne 20 %, 30 %, 40 % et 50 % des tâches élémentaires (expérimentalement, ce pourcentage n'a pas d'influence sur la qualité des planifications). On a considéré le cas où le nombre de moyens est égal au nombre de tâches élémentaires (c'est le cas le plus complexe en théorie). Le module de planification est aussi très efficace quand ces nombres sont différents.

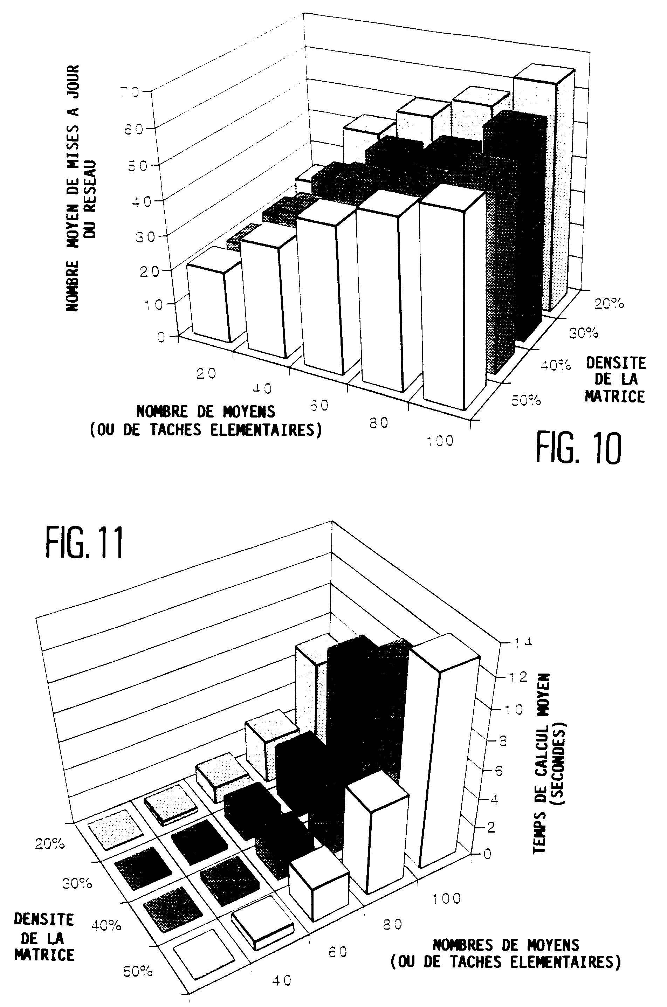

Le nombre des mises à jour complètes du réseau est indépendant de la taille du problème: la figure 10 montre la relation entre le nombre moyen de mises à jour du réseau et le nombre de moyens (ou de tâches élémentaires) quand celui-ci varie de 20 à 100. Les moyennes sont effectuées sur des échantillons de 100 simulations avec des intitialisations aléatoires différentes des sorties des neurones. On vérifie expérimentalement que plus la matrice d'adéquation est pleine, c'est-à-dire plus le nombre de possibilités de planifications est grand, plus le nombre de mises à jour du réseau nécessaire pour trouver une solution optimale est petit. De plus, sur les 1000 essais, le module de planification a toujours trouvé une planification optimale en utilisant moins de 20 phases d'excitation.

La figure 11 montre des temps de calculs moyens quand le procédé est simulé sur une station de travail SUN-SPARC 10-51 en fonction de la taille du problème et de la densité de la matrice des affectations possibles.

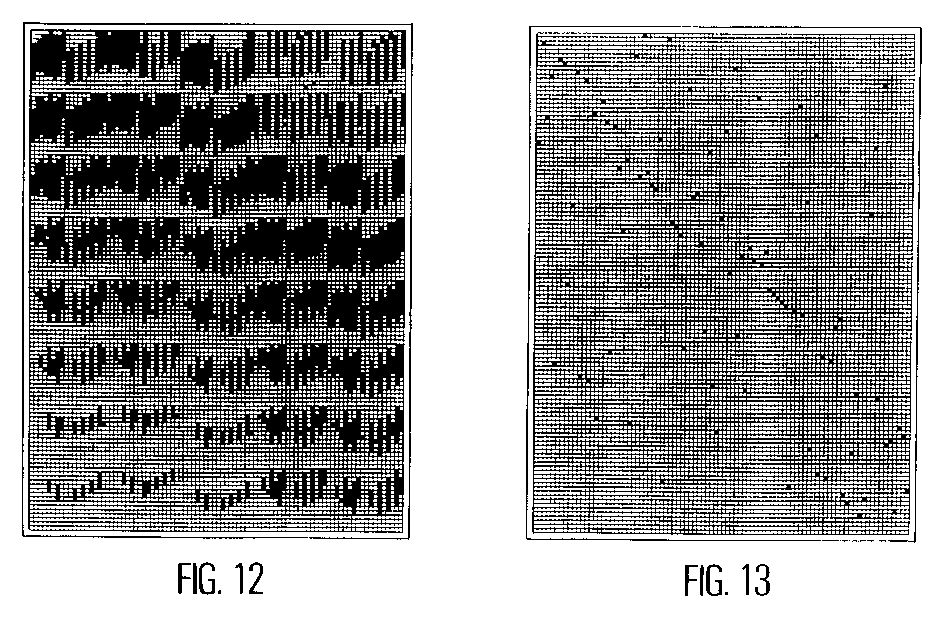

La figure 12 montre un exemple de matrice d'affectations possibles, les lignes correspondant aux moyens et les colonnes aux tâches élémentaires, et la figure 13 montre la planification retenue.

On va maintenant considérer un exemple de réalisation sur des matrices d'affectation réelles. On a testé le procédé sur une grande variété de matrices d'affectation à coefficients réels aléatoires. On a testé le module de planification en mode asynchrone séquentiel en nous limitant à 20 phases d'excitation. En fonction de l'état initial aléatoire des sorties des neurones, les résultats sont distribués sur une gaussienne. Par comparaison avec les résultats fournis en utilisant la méthode du recuit simulé pour le même problème, le module de planification propose une solution de qualité légèrement inférieure en moyenne au bout d'un nombre de mises à jour du réseau négligeable (quelques dizaines de mises à jour) comparé aux millions de mises à jour nécessaires en recuit simulé.

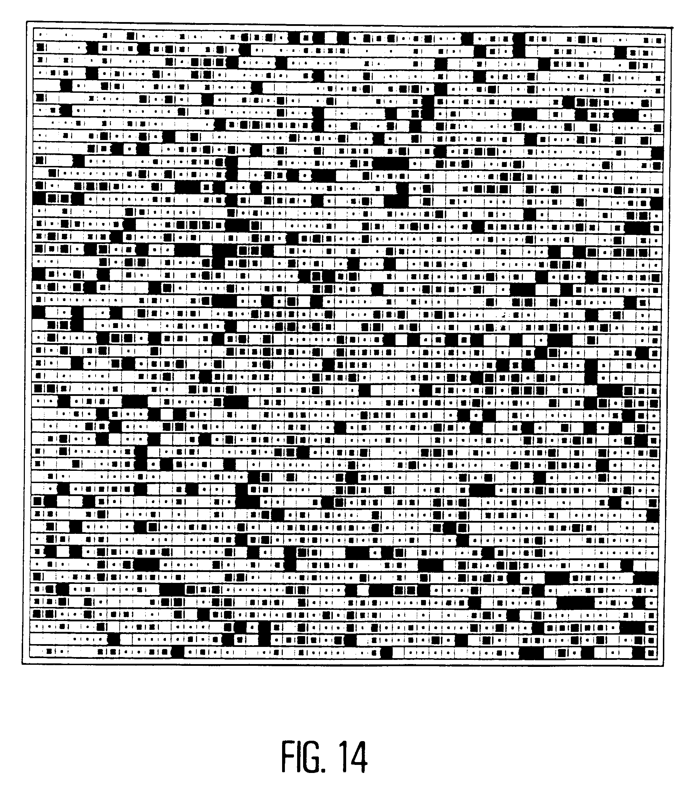

A titre d'exemple, pour un problème de 50 moyens à distribuer sur 50 tâches élémentaires, le minimum du coût de planification trouvé par la méthode du recuit simulé vaut 4,17873 après 22 minutes et 10 secondes sur un ordinateur SUN SPARC 10-51. La figure 14 montre la matrice des affectations possibles considérée, les lignes correspondant aux moyens et les colonnes aux tâches élémentaires. Afin d'étudier les performances du procédé, on a considéré les trois cas suivants :

- au lieu de manipuler la matrice complète des affectations possibles, une approximation consiste à binariser cette matrice: tous les coefficients supérieurs à 0,5 deviennent des 1 et les autres deviennent des 0. On utilise alors le procédé décrit dans le cas binaire;
- au lieu de manipuler la matrice complète des affectations, une approximation consiste à ne garder que les coefficients supérieurs à 0,5 et à mettre tous les autres à 0. Ceci a pour effet de diminuer le temps de fonctionnement car on ne cherche jamais à mettre à jour un neurone pour lequel le coefficient d'affectation est nul;
- on manipule la matrice complète des affectations possibles.

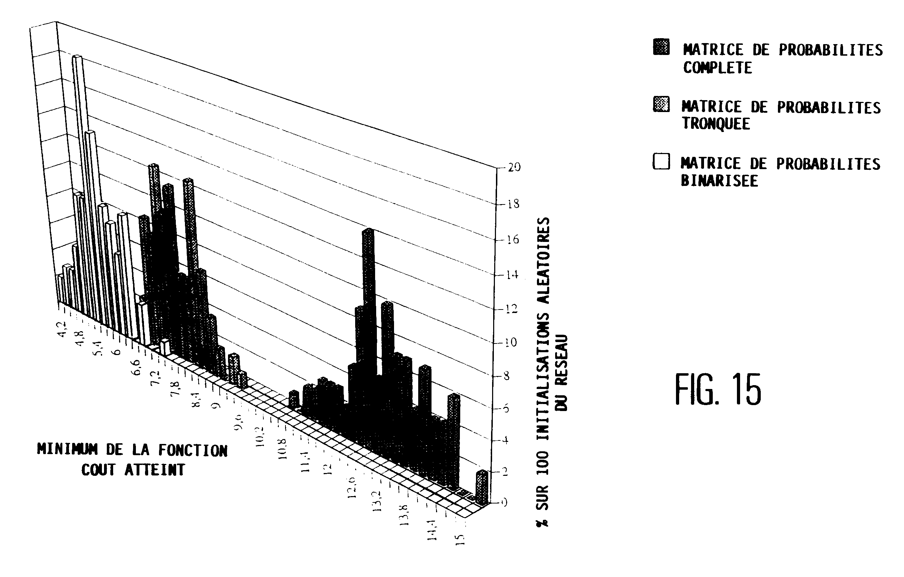

La figure 15 donne la distribution des résultats en fonction de l'état initial aléatoire du réseau quand on traite la matrice aléatoire de 50 x 50. En moins de 15 secondes, une simulation du procédé fournit une solution satisfaisant les contraintes pour laquelle le minimum moyen atteint vaut 5,654872. On constate expérimentalement que la qualité du minimum atteint dépend de l'état initial des sorties des neurones. Les résultats sont distribués sur une gaussienne centrée en 5,6. Sur 100 essais, on constate que le minimum atteint est compris entre 4,2 et 7,6. On remarque que dans le cas où on binarise la matrice de probabilités, on obtient en moyenne un coût de 13,03 sur 100 essais en 0,5 secondes de simulation. La valeur la plus basse atteinte est 10,6 et la plus haute 15,2. Ceci est une conséquence de la grande complexité du problème. Sur 100 essai, on a une chance quasi nulle de tomber sur une solution qui minimise correctement le coût de planification. On remarque de plus sur cette figure 6 que tronquer la matrice pénalise très sensiblement la qualité des résultats.

## Revendications

1. Procédé de gestion optimale de moyens, pris dans un ensemble de N moyens, aptes à accomplir une tâche globale découpée fonctionnellement en un ensemble de M tâches élémentaires pouvant être exécutées en parallèle, caractérisé en ce qu'on utilise un réseau de neurones décrit par un procédé itératif de détermination de variables qui codent la décision d'utiliser ou non un moyen sur une tâche élémentaire et qui satisfont des contraintes imposées par l'utilisation conjointe de moyens pour accomplir des tâches élémentaires de qualité mesurée, chaque contrainte représentant une association d'un moyen à une tâche élémentaire, et en ce que ledit procédé comporte les étapes suivantes :
   - on construit un modèle de planification des moyens à partir des variables, de la qualité des associations, des contraintes et d'une mesure de la qualité de la planification ;
   - on utilise un procédé d'interruption pour prendre en compte ou non la mesure de la qualité de la planification ;
   - on initialise les variables ;
   - on réalise une exploitation dynamique récursive du modèle de planification ;
   - on détermine la planification de qualité maximale mesurée, en alternant ou non les étapes prenant en compte la qualité de la planification ;
   - on obtient une affectation des différents moyens aux différentes tâches élémentaires.

2. Procédé selon la revendication 1, caractérisé en ce qu'il prend en compte la dérivée par rapport aux variables de la fonction mesurant la qualité globale.

3. Procédé selon la revendication 1, caractérisé en ce que dans une étape élémentaire du procédé récursif la détermination du signal d'entrée de la variable $p_{ij}$ à t s'obtient à partir de la variation du signal d'entrée obtenu entre les temps t-1 et t de la variable $p_{ij}$ que l'on ajoute au signal d'entrée obtenu au temps t-1, et en ce que l'on a successivement les étapes suivantes:
   a) On détermine un ensemble de corrections si l'ensemble des valeurs courantes des variables au temps t-1 viole des contraintes;
   b) On détermine une correction associée à la maximisation de la qualité de l'accomplissement de la tâche globale, et déterminée à partir de la dérivée par rapport à la variable $p_{ij}$ de la fonction qui mesure la qualité de bon accomplissement de l'ensemble de tâches élémentaires au temps t-1 ;

c) A partir de l'instant t pour lequel les signaux d'entrée sont tous nuls, c'est-à-dire à partir du moment où le réseau de neurones a convergé,, on prend en compte cette correction définie en b) un nombre de fois fixé pour chaque variable, le signal d'entrée de la variable $p_{ij}$ augmentant si cette correction est prise en compte.

d) On calcule la variation du signal d'entrée entre les temps t-1 et t en sommant les termes de correction obtenus à l'étape a) et on ajoute la correction obtenue à l'étape b) un nombre de fois fixé pour chaque variable à partir de l'instant t pour lequel les signaux d'entrée sont tous nuls;

e) On ajoute cette variation de signal d'entrée au signal d'entrée à t-1 : on obtient ainsi le signal d'entrée au temps t;

f) On applique une fonction de seuillage à sortie binaire sur ce signal d'entrée et on obtient la valeur de la variable au temps t.

4. Procédé selon la revendication 3, caractérisé en ce que, dans le procédé itératif d'exploitation du module d'organisation, l'on a successivement les étapes suivantes :

a) On applique la correction pendant un nombre préalablement fixé de mises à jour de chaque variable ;

b) On supprime ensuite cette correction en ne prenant pas en compte la correction dans la détermination des signaux d'entrée associés aux variables ;

c) On applique le procédé de mise à jour d'une variable sur chaque variable ou sur toutes les variables à la fois, aussi longtemps que l'une au moins des variations des signaux d'entrée de toutes les variables est non nulle ;

d) On arrête le procédé de mise à jour d'une variable quand les variations des signaux d'entrée associés à toutes les variables sont toutes nulles ;

e) On obtient alors la première solution ;

f) Pour tenter de trouver une solution meilleure, on recommence à l'étape a) le nombre de fois souhaité.

5. Procédé selon la revendication 4, caractérisé en ce que, à tout instant, la meilleure solution est mémorisée, et en ce qu'à chaque fois qu'on effectue l'étape a), on mesure la qualité de la solution atteinte et on compare cette qualité à la qualité de la meilleure solution.

6. Procédé selon la revendication 4, caractérisé en ce qu'à chaque fois qu'on effectue l'étape a), on mesure la qualité de la solution atteinte, en ce que l'on mémorise cette solution, et en ce qu'à la fin, on sélectionne la meilleure solution parmi toutes celles mémorisées.

7. Dispositif de gestion optimale de moyens, pris dans un ensemble de N moyens, aptes à accomplir une tâche globale découpée fonctionnellement en un ensemble de M tâches élémentaires pouvant être exécutées en parallèle, dans lequel on utilise un réseau de neurones décrit par un procédé itératif de détermination de variables qui codent la décision d'utiliser ou non un moyen sur une tâche élémentaire et qui satisfont des contraintes imposées par l'utilisation conjointe de moyens pour accomplir des tâches élémentaires de qualité mesurée, chaque contrainte représentant une association d'un moyen à une tâche élémentaire, caractérisé en ce que ledit dispositif comporte :

- une première mémoire (30) des valeurs des variables qui reçoit en entrée la sortie d'un circuit (31) de tirage d'un entier i compris entre 0 et N ;
- une seconde mémoire (34) des qualités des associations recevant en entrée la sortie d'un circuit (35) apte à quantifier les qualités des associations moyens/tâches élémentaires ;
- une troisième mémoire (39) des valeurs des signaux d'entrée ;
- un circuit (36) apte à analyser la violation de contraintes et à effectuer le calcul d'une correction à appliquer à un signal d'entrée associé à une variable $p_{ij}$, recevant en entrée les sorties de la première mémoire et la sortie du circuit de tirage d'un entier ;
- un circuit (37) apte à calculer une dérivée par rapport à une variable de la fonction de mesure de la qualité de la planification globale recevant en entrée les sorties de la première mémoire, celle de la seconde mémoire et celle du circuit de tirage d'un entier ;
- un circuit (38) de calcul d'une correction pour maximiser la qualité de la planification recevant en entrée les sorties de la première et de la seconde mémoire et celle du circuit de correction ;
- un dispositif d'interruption (40) recevant en entrée les sorties de la troisième mémoire ;
- un circuit de seuillage (43) à sortie binaire recevant la sortie de ce second additionneur qui délivre la variable $p_{ij}$.

FIG. 1

FIG. 2

$P_1(k-1)$  $T_1^i$

$z^{-1}$

20

$P_j(k-1)$  $T_j^i$  $\Sigma$  $\Sigma$  $u_i(k)$  $P_i(k)$

$\Delta u_i(k)$

$P_N(k-1)$  $T_N^i$

$I_i$

FIG. 3

N MOYENS    M TACHES
ELEMENTAIRES    $a_{ij}$    $E(p_{ij})$

DEFINITION
DES
VARIABLES

CONSTRUCTION DU
MODULE DE
PLANIFICATION

INITIALISATION
DES
VARIABLES

EXPLOITATION
DU MODULE DE
PLANIFICATION    INTERRUPTION

FIG. 4

PROPOSITION DE
PLANIFICATION

FIG. 5

FIG. 6

FIG. 8

FIG. 7

FIG. 9

FIG. 10

FIG. 11

FIG. 13

FIG. 12

FIG. 14

FIG. 15

MATRICE DE PROBABILITES
COMPLETE

MATRICE DE PROBABILITES
TRONQUEE

MATRICE DE PROBABILITES
BINARISEE

% SUR 100 INITIALISATIONS ALEATOIRES
DU RESEAU

MINIMUM DE LA FONCTION
COUT ATTEINT

EP 0 664 518 A1

**Office européen des brevets**

**RAPPORT DE RECHERCHE EUROPEENNE**

Numero de la demande

EP 95 40 0132

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE INTERNATIONAL JOINT CONFERENCE ON NEURAL NETWORKS, 18 Novembre 1991, SINGAPORE<br>pages 1230 - 1235<br>POTVIN ET AL 'a neural network approach to the vehicle dispatching problem'<br>* le document en entier *<br>--- | 1,7 | G06F17/60 |
| A | IEICE TRANSACTIONS ON INFORMATION AND SYSTEMS,<br>vol.E76-D, no.8, Août 1993, TOKYO JP<br>pages 947 - 955<br>THAWONMAS ET AL 'a real-time scheduler using neural networks for scheduling independant and nonpreemtable tasks with deadlines and resource requirements'<br>* page 949, colonne 1, ligne 19 - page 951, colonne 2, ligne 23; figure 1 *<br>----- | 1,7 | |
| | | | **DOMAINES TECHNIQUES RECHERCHES (Int.Cl.6)**<br><br>G06F |

Le présent rapport a été établi pour toutes les revendications

| Lieu de la recherche | Date d'achèvement de la recherche | Examinateur |
|---|---|---|
| LA HAYE | 3 Mai 1995 | Guingale, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................................
& : membre de la même famille, document correspondant

EPO FORM 1503 03.82 (P04C02)

26